# EUROPÄISCHE PATENTSCHRIFT

(11) **EP 1 902 407 B1**
(45) Veröffentlichungstag und Bekanntmachung des Hinweises auf die Patenterteilung: **17.03.2010**
(21) Anmeldenummer: 06764047.4
(22) Anmeldetag: 04.07.2006
(51) Int. Cl.: G06K 9/03, G06F 17/24, G06K 9/20

(54) **SYSTEM ZUM ÜBERTRAGEN VON DATEN AUS EINER DOKUMENTENANWENDUNG IN EINE DATENANWENDUNG**
SYSTEM FOR TRANSMITTING DATA FROM A DOCUMENT APPLICATION TO A DATA APPLICATION
SYSTEME POUR TRANSMETTRE DES DONNEES D'UNE APPLICATION DE DOCUMENTS VERS UNE APPLICATION DE DONNEES

(30) Priorität: 08.07.2005 DE 102005032046
(43) Veröffentlichungstag der Anmeldung: 26.03.2008
(73) Patentinhaber: Open Text Document Technologies GmbH, 78467 Konstanz (DE)
(72) Erfinder: SCHACHT, Johannes, 78464 Konstanz (DE)
(74) Vertreter: Schaumburg, Thoenes, Thurn, Landskron, Eckert
(86) Internationale Anmeldenummer: PCT/EP2006/063845
(87) Internationale Veröffentlichungsnummer: WO 2007/006687

(56) Entgegenhaltungen:
- EP-A- 1 510 962
- WO-A-2005/043452
- US-A1- 2002 141 660
- SCHACHT J: "'Single Click Entry' das neue Tool von Océ Document Technologies macht Nachbearbeitung von Dokumenten noch schneller"[Online] 12. August 2004 (2004-08-12), XP002399735 Gefunden im Internet: URL:http://www.oce.com/de/presse/Newsbulle tins/Presse2004/singleClick.htm> [gefunden am 2006-09-20]
- OCÉ DOCUMENT TECHNOLOGIES: "DokuStar Produktfamilie"[Online] 2004, XP002399736 Gefunden im Internet: URL:http://www.electronic-office.de/pdf/Oc e-Odt/DOKuStar_Product_Family_d.pdf> [gefunden am 2006-09-20]
- SCHACHT J: "Single Click Entry oder wie die Maus in der Datenerfassung salongfähig wird"[Online] Januar 2005 (2005-01), XP002399737 Gefunden im Internet: URL:http://www.odt-oce.com/german/dokument eninterpretation/pdfs/WhitePaper_Single_Cl ick_Entry.pdf> [gefunden am 2006-09-20] -& SCHACHT J: "Newsletter for Docum ent Professionals 01/05"[Online] 18. Februar 2005 (2005-02-18), XP002399738 Gefunden im Internet: URL:http://www.odt-oce.com/german/news_pre sse/Newsletter/1_2005/Ausgabe_1_2005.htm> [gefunden am 2006-09-20]

## Beschreibung

Die Erfindung betrifft ein Verfahren und ein System zum Übertragen von Daten aus einer Dokumentenanwendung in eine Datenanwendung.

Bei der täglichen Büroarbeit müssen oft Formulare mit Daten gefüllt werden. Meistens stammen die Daten aus Dokumenten. Diese in den Dokumenten enthaltenen Daten werden oftmals von Hand in Datenfelder des Formulars eingetragen. Hierzu wird entweder das Formular und das Dokument gleichzeitig an einem Computerbildschirm dargestellt. Falls der Computerbildschirm keine ausreichende Größe besitzen sollte, wird das die Daten enthaltende Dokument auch oftmals ausgedruckt und von dem gedruckten Exemplar werden die Daten in das Formular abgeschrieben. Falls das Dokument als elektronische Textdatei vorliegt, ist es auch möglich, die von gängigen Betriebssystemen zur Verfügung gestellte "copy+paste"-Funktion zu verwenden, mit welcher ein Datenwert im Dokument markiert, kopiert und in das Datenfeld eines elektronischen Formulars eingefügt werden kann. Diese bekannten Verfahren sind sehr arbeitsintensiv, da entweder alle Daten manuell eingegeben werden müssen oder zwischen einer Dokumentenanwendung, in der das Dokument dargestellt wird, und einer Datenanwendung, in der das Formular angezeigt wird, ständig hin und her geschaltet werden muss. Diese einfache Tätigkeit ist somit zeitaufwendig und bindet in Unternehmen erhebliche Arbeitsleistung, die für wertvollere Tätigkeiten eingesetzt werden könnte.

Um diese Tätigkeit zu automatisieren wurden vollautomatische Datenerfassungssysteme entwickelt, mit welchen große Mengen von Dokumenten automatisch eingelesen, die darin enthaltenen Daten extrahiert und in Datenbanken eingetragen werden.

Ein solches System zum Erfassen von Daten geht aus der WO 2005/043452 A1 hervor. Bei diesem System müssen Vorlagen erstellt werden, gemäß welchen die entsprechenden Bereiche in den Dokumenten automatisch aufgefunden werden, aus welchen die Daten ausgelesen und in die Datenbank eingelesen werden. Bei diesem System werden nicht korrekt eingelesene Datensätze von Hand korrigiert. Dieses System zeichnet sich dadurch aus, dass die bestehenden Vorlagen anhand der manuellen Korrekturen automatisch korrigiert bzw. neue Vorlagen automatisch erstellt werden.

Diese vollautomatischen Systeme, bei welchen die Dokumente automatisch eingelesen, automatische extrahiert und die extrahierten Daten automatisch in eine Datenbank eingetragen werden, sofern keine Korrekturen notwendig sind, sind für den "großindustriellen" Einsatz, d.h. für Produktionsbedingungen von standardisierten Abläufen bzw. Dokumenten vorgesehen.

Außer der oben erläuterten copy+paste-Funktion gibt es für die regelmäßige Datenerfassung aus Dokumenten, für die sich derartige vollautomatische Systeme nicht lohnen, keine Mittel, die die Datenerfassung von in Dokumenten enthaltenen Daten unterstützen, wobei die Dokumente in Dokumentenanwendungen auf einem Computerbildschirm angezeigt werden und die darin enthaltenen Daten in Datenanwendungen zu übertragen sind.

Es ist daher Aufgabe der vorliegenden Erfindung, ein System zum Übertragen von Daten aus einer Dokumentenanwendung in eine Datenanwendung zu schaffen, mit welchen die Daten wesentlich schneller und einfacher als mit der bekannten copy+paste-Funktion übertragen werden können.

Die Aufgabe wird durch ein System mit den Merkmalen des Anspruchs 1 gelöst. Vorteilhafte Ausgestaltungen der Erfindung sind in den Unteransprüchen angegeben.

Das erfindungsgemäße System dient zum Ausführen eines Verfahrens zur computergestützten Übertragung von Daten aus einer in einem Computer geöffneten Dokumentenanwendung in eine in einem Computer geöffnete Datenanwendung. Das System umfasst eine Konfigurationsroutine zum Konfigurieren des Datentransfers. Mit der Konfigurationsroutine werden Datenfeldern der Datenanwendung Datenfeldnamen zugeordnet. Diesen Datenfeldnamen können wiederum bestimmte Datentypen zugewiesen werden. Diese Konfigurationsroutine kann zum automatischen Lesen von Datenfeldern einer Datenanwendung ausgebildet sein, wobei die Datenfelder anhand von Begrenzungslinien von Datenfeldern in einer grafischen Eingabemaske erkannt werden.

Mit Hilfe eines so konfigurierten Systems kann einfach ein Verfahren durchgeführt werden, bei dem der Name des Datenfeldes angezeigt wird, für welches Daten zu übertragen sind. Dafür wird ein Mittel zur Verfügung gestellt, mit dem durch Kennzeichnen eines entsprechenden Datenwertes im Dokument auf der Anzeigeeinrichtung die den Datenwert darstellende Zeichenfolge automatisch aus dem Dokument ausgelesen und durch Betätigen einer vorbestimmten Taste in das dem Datenfeldname entsprechende Datenfeld in der Datenanwendung eingetragen wird.

Hierauf wird vorzugsweise der Name des nächsten auszulesenden Datenfelds angezeigt und das Verfahren wird solange wiederholt, bis in ein jedes Datenfeld eines Datensatzes der Datenanwendung Daten übertragen worden sind.

Ein wesentlicher Vorteil des mit Hilfe des erfindungsgemäßen Systems ausführbaren Verfahrens gegenüber der bekannten copy+paste-Funktion liegt darin, dass zum Übertragen der Daten nicht zwischen der Dokumentenanwendung und der Datenanwendung hin und her geschaltet werden muss, sondern das Übertragen alleine in der Dokumentenanwendung ausgeführt werden kann, indem lediglich durch Kennzeichnen des auszulesenden Datenwertes und durch Betätigen einer vorbestimmten Taste die Datenübertragung erfolgt. So können schnell Formulare in Datenanwendungen ausgefüllt werden. Ermöglicht wird dies insbesondere dadurch, dass zwischen der Dokumentenanwendung und der Datenanwendung ein intelligentes, insbesondere als Computerprogramm ausgebildetes Verbindungsmodul zur Verfügung gestellt wird, mit dem der Benutzer gleichzeitig durch das von der Dokumentenanwendung angezeigte Dokument und durch die Datenfelder der Datenanwendung geführt wird. Dieses Modul ermöglicht es weiterhin insbesondere, zu einem Datenfeld der Datenanwendung den entsprechenden Datenfeldnamen auf der Anzeigeeinrichtung anzuzeigen, eine im angezeigten Dokument gekennzeichnete Zeichenfolge automatisch auszulesen und, insbesondere nach dem Betätigen einer vorbestimmten Taste, diese Zeichenfolge in das dem Datenfeldnamen entsprechende Datenfeld der Datenanwendung einzutragen.

Das Verfahren kann als selbständiges Computerprogramm realisiert werden, jedoch auch in bestehende Dokumentenanwendungen, bzw. Datenanwendungen integriert werden und ist auf einem kleinen Personalcomputer lauffähig, so dass es nicht notwendig ist, ein wesentlich teureres und komplexeres vollautomatisches Datenerfassungssystem vorzusehen.

Vorzugsweise wird die aus dem Dokument ausgelesene Zeichenfolge auf der Anzeigeeinrichtung angezeigt, insbesondere vergrößert, so dass der Benutzer die Zeichenfolge überprüfen kann, bevor er sie zum Eintragen in die Datenanwendung durch Betätigen der Taste freigibt.

Nach einer weiteren bevorzugten Ausführungsform wird als die auszulesende Zeichenfolge diejenige Zeichenfolge bestimmt, die sich zwischen zwei Leerzeichen befindet, oder es wird ein bestimmter, für das Datenfeld vorliegender Datentyp berücksichtigt und dementsprechend die Zeichenfolge bestimmt. Typische Datentypen sind Datumsangaben, Beträge wie sie auf Rechnungen vorkommen, Ortsbezeichnungen einschließlich Postleitzahl, Straßenbezeichnungen und Zeitangaben. Solche Datentypen können auch Leerzeichen umfassen.

Nach einer weiteren bevorzugten Ausführungsform wird eine ausgelesene und zu übertragende Zeichenfolge normiert, d.h. entsprechend einem vorbestimmten Format umgewandelt und in der normierten Form in die Datenanwendung eingetragen. Enthält die Datenanwendung mehrere Datensätze, dann sind die in den einzelnen Datenfeldern enthaltenen Daten jeweils im gleichen Format eingetragen, was die spätere Bearbeitung der abgespeicherten Daten erleichtert.

Die Erfindung wird nachfolgend beispielhaft anhand der Zeichnungen näher erläutert. In den Zeichnungen zeigen:
- Fig. 1: eine Bildschirmdarstellung einer Dokumentenanwendung und einer Datenanwendung, wobei das erfindungsgemäße Verfahren zum Übertragen von Daten aus der Dokumentenanwendung in die Datenanwendung ausgeführt wird,
- Fig. 2: eine Konfigurationstabelle,
- Fig. 3: eine Bildschirmdarstellung einer Dokumentenanwendung und einer Datenanwendung zusammen mit einer entsprechenden Konfigurationstabelle,
- Fig. 4: eine Bildschirmdarstellung einer Dokumentenanwendung und einer Datenanwendung zusammen mit einer entsprechenden Konfigurationstabelle,
- Fig. 5: das erfindungsgemäße Verfahren in einem Flussdiagramm, und
- Fig. 6: schematisch vereinfacht ein System zum Ausführen des erfindungsgemäßen Verfahrens.

Das erfindungsgemäße Verfahren dient zum Übertragen von Daten aus einer Dokumentanwendung in eine Datenanwendung.

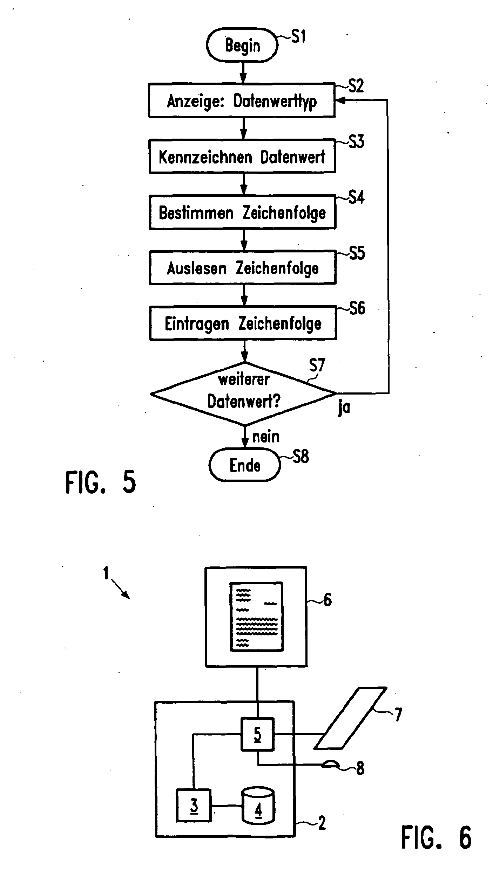

Das erfindungsgemäße Verfahren wird auf einem Computersystem 1 ausgeführt, wie es z.B. in Figur 6 gezeigt ist. Dieses Computersystem 1 weist einen Computer 2 mit einer zentralen Recheneinheit 3 (CPU) einer Speichereinrichtung 4 (z.B. Festplatte) und einen Interface 5 auf. An das Interface 5 sind eine Anzeigeeinrichtung 6 (Bildschirm) und Eingabeeinrichtungen in Form einer Tastatur 7 und einer Computermaus 8 angeschlossen. Dieses Computersystem 1 ist üblicherweise ein handelsüblicher Personalcomputer.

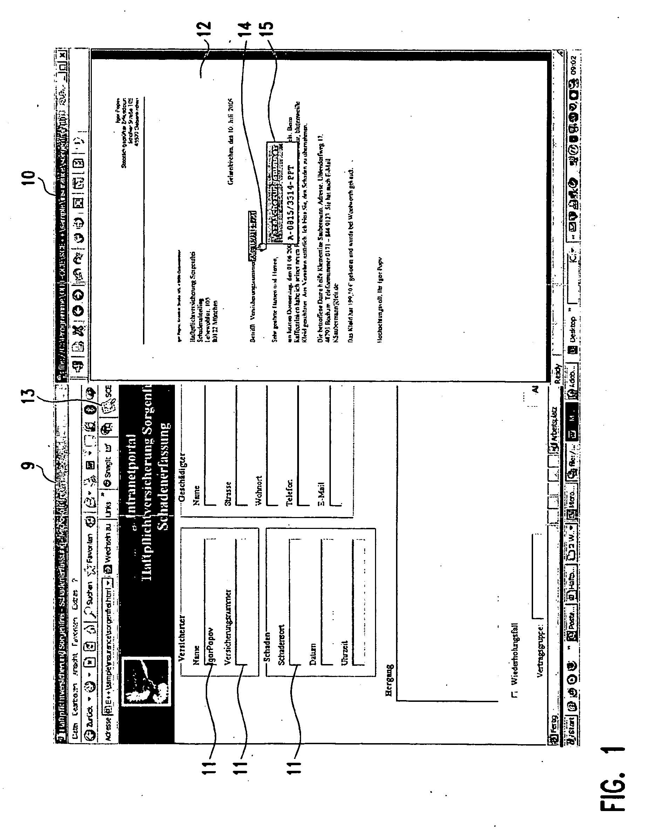

Auf dem Computer wird eine Datenanwendung 9 und eine Dokumentenanwendung 10 ausgeführt (Fig. 1). Eine Dokumentenanwendung ist ein jedes Computerprogramm, mit dem ein Dokument an einer Anzeigeeinrichtung eines Computers, wie z.B. einem Computerbildschirm, dargestellt werden kann. Das Dokument kann in Form einer Textdatei (Word-Dokument, rtf-Dokument, txt-Dokument, Email, etc.) oder in Form einer Grafikdatei (pdf-Dokument, tiff-Dokument, etc.) vorliegen. Eine Datenanwendung ist ein jedes Computerprogramm, bei dessen Ausführung Datenwerte eingetragen werden können. Typische Datenanwendungen sind Datenbanken und Tabellenkalkulationsprogramme. Datenanwendungen können jedoch auch Dateien in einer Metasprache, wie z.B. html, sein, die Felder zum Eintragen der Daten enthalten.

Sowohl der Dokumentenanwendung als auch der Datenanwendung, sind separate Speicherbereiche am Computer 2 zugeordnet, in welchen die von der jeweiligen Anwendung bearbeiteten Daten gespeichert sind. Mit der Erfindung sollen somit bestimmte, vom Benutzer auswählbare Datenwerte aus dem Speicherbereich der Dokumentenanwendung auf einfache Art und Weise in den Speicherbereich der Datenanwendung übertragen werden.

In Fig. 1 ist als Ausführungsbeispiel eine Datenanwendung in Form eines Internet-Browsers gezeigt, in dem eine Intranet-Seite der Haftpflichtversicherung Sorgenfrei aufgerufen ist, in der ein Formular zur Schadenserfassung enthalten ist. Dieses Formular weist Datenfelder 11 auf, in welche die einzelnen Datenwerte eines in der Dokumentenanwendung 10 dargestellten Dokumentes 12 einzutragen sind. Das Dokument 12 ist ein Schreiben an die Versicherung, in welchem ein Schaden mitgeteilt wird. Im vorliegenden Beispiel ist das erfindungsgemäße Verfahren als Computerprogramm realisiert, das in die Datenanwendung 9 integriert ist und dort mittels eines Mausklicks an einem Icon 13 gestartet wird. Dieser Icon ist mit SCE bezeichnet, was die Abkürzung für Single Click Entry^{™} ist. Durch betätigen des Icons 13 wird das Verfahren gestartet (Schritt S1 in Fig. 5). Hierauf wird dem Cursor 14 ein Fenster 15 hinzugefügt, das zusammen mit dem Cursor bewegt wird. In dem Fenster 15 wird ein Datenfeldname angezeigt (S2). In Fig. 1 ist der Datenfeldname die "Versicherungsnummer".

Der Cursor 14 wird in der Nähe der im Dokument enthaltenen Versicherungsnummer bewegt, wodurch die die Versicherungsnummer darstellende Zeichenfolge gekennzeichnet, bzw. von dem Programm erfasst wird (S3).

Es wird nun automatisch bestimmt (S4), welche Zeichen zu dieser Zeichenfolge gehören. Diese Bestimmung erfolgt normalerweise, indem die Zeichenfolge ermittelt wird, die sich zwischen zwei Leerzeichen befindet. Ist für einen Datenfeld, für das ein Datenwert aus dem Dokument auszulesen ist, ein bestimmter Datentyp definiert, so erfolgt die Bestimmung der zu der Zeichenfolge gehörenden Zeichen anhand dieses Datentypes. Solche Datentypen sind z.B. Datumsangaben, Beträge, wie sie auf Rechnungen vorkommen, Ortsbezeichnungen einschließlich der Postleitzahl, Straßenbezeichnungen, Zeitangaben, Telefonnummern und Email-Adressen möglich. Durch die Verwendung von Datentypen bzw. Datenformaten zur Bestimmung der Zeichenfolge im Schritt S4, wird diese Bestimmung zuverlässiger.

Die derart bestimmte Zeichenfolge wird im Dokument 12 farbig markiert und ausgelesen, d.h. aus dem Speicherbereich gelesen, der der Dokumentenanwendung zugeordnet ist. Die ausgelesene Zeichenfolge wird im Fenster 15 unterhalb des Datenfeldnames angezeigt. Dies ist besonders vorteilhaft, wenn das Dokument 12 in Form einer Grafikdatei vorliegt und die ausgelesene Zeichenfolge aufgrund eines automatischen Zeichenerkennungsverfahrens (OCR-Verfahren) erfolgt, da es sein kann, dass bei der automatischen Zeichenerkennung nicht immer alle Zeichen korrekt erkannt werden. Die im Fenster 15 dargestellte Zeichenfolge kann dann mittels der Tastatur 7 manuell korrigiert werden. Ist die im Dokument 12 markierte bzw. im Fenster 15 dargestellte Zeichenfolge zu lang oder zu kurz, so kann dies durch entsprechende Eingaben an der Tastatur korrigiert werden, oder es ist auch möglich mit der Maus von Hand einen Rahmen über eine vom Benutzer ausgewählte Zeichenfolge aufzuziehen, die dann im Schritt S5 ausgelesen und im Fenster 15 dargestellt wird. Diese Korrekturfunktion wird jedoch nur im Ausnahmefall zum Auslesen einer Zeichenfolge, deren Datentyp nicht definiert ist und die ein oder mehrere Leerzeichen beinhaltet oder zum Einlesen eines mehrerer Wörter und/oder Zeilen umfassenden Freitextes benötigt. Üblicherweise erfolgt das Kennzeichnen des Datenwertes (S3), das Bestimmen der Zeichenfolge (S4) und das Auslesen der Zeichenfolge (S5) alleine durch Bewegen des Cursors 14 in die Nähe der entsprechenden Zeichenfolge.

Ist die ausgelesene und im Fenster 15 angezeigte Zeichenfolge korrekt, so wird durch Betätigen einer Taste das Eintragen der Zeichenfolge in das entsprechende Datenfeld 11 in der Datenanwendung 9 ausgeführt (S6). Hierbei wird diese Zeichenfolge in den Speicherbereich der Datenanwendung gespeichert. Dies kann erfolgen, indem die Zeichenfolge selbst oder ihre Speicheradresse an die Datenanwendung übergeben oder in diese kopiert wird, wobei eine entsprechende Verknüpfung mit dem zugehörigen Datenfeld 11 erfolgt.

Danach wird geprüft, ob ein weiterer Datenwert einzulesen ist (S7), um in alle Datenfelder eines Datensatzes der Datenanwendung Daten einzutragen. Ist dies der Fall, dann geht der Verfahrensablauf wieder auf den Schritt S2 über.

Ist kein weiterer Datenwert einzulesen, so wird das Verfahren mit dem Schritt S8 beendet.

Das erfindungsgemäße Computerprogramm umfasst alle Schritte des in Fig. 5 gezeigten Verfahrens. Es ist auf dem Computer 2 gespeichert und wird dort zur Ausführung gebracht. Das Computerprogramm kann auch auf einen Datenträger gespeichert sein, um z.B. auf einen anderen Computer übertragen zu werden.

In Fig. 1 ist zur Erläuterung sowohl die Datenanwendung 9, als auch die Dokumentenanwendung 10 dargestellt. Zur Benutzung des erfindungsgemäßen Verfahrens ist es jedoch nicht notwendig, dass am Bildschirm 6 beide Anwendungen 9, 10 gleichzeitig dargestellt werden. Ist das erfindungsgemäße Verfahren einmal gestartet worden, so genügt es, wenn am Bildschirm alleine die Dokumentenanwendung 10 dargestellt wird, da die einzelnen Datenwerte in die Datenanwendung 9 mit dem erfindungsgemäßen Verfahren übertragen werden können, ohne dass man hierzu die Datenanwendung 9 am Bildschirm darstellen muss. Hierbei wird lediglich in der Dokumentenanwendung 10 der Cursor 14 in den Bereich der entsprechenden Datenwerte bewegt und dann durch Betätigen der entsprechenden Taste die Übertragung der ausgelesenen Zeichenfolge ausgeführt.

Das oben erläuterte Ausführungsbeispiel kann durch weitere Merkmale und Verfahrensschritte ergänzt werden.

So ist es z.B. zweckmäßig, wenn im Schritt S2 ein Datenfeldname angezeigt wird und diesem Datenfeldname ein Format bzw. Datentyp zugeordnet ist, alle Zeichenfolgen im Dokument 12 zu markieren die diesem Datentyp entsprechen. Hierdurch wird dem Bediener das Aufsuchen der entsprechenden Zeichenfolgen zum Kennzeichnen der Datenwerte erleichtert.

Bei einer weiteren bevorzugten Ausführungsform wird die im Schritt S5 ausgelesene Zeichenfolge gemäß einem vorbestimmten Datenanwendungsformat formatiert und in dieser formatierten Form im Fenster 15 angezeigt und dann in die Datenanwendung im Schritt S6 eingetragen. Das Datenanwendungsformat muss nicht mit dem oben beschrieben Datentyp zum Bestimmen der Zeichenfolge im Schritt S4 übereinstimmen. Der im Schritt S4 verwendete Datentyp kann eine Vielzahl von unterschiedlichen Formaten umfassen, wie z.B. diverse Formate zur Darstellung einer Datumsangabe, beispielsweise mit oder ohne ausgeschriebenen Monat, wie sie im Dokument 12 vorkommen können. Beim Bestimmen der auszulesenden Zeichenfolge sind alle möglichen Datenformate bzw. Datentypen zu berücksichtigen.

Das Datenanwendungsformat ist hingegen ein eindeutiges Format, dass keine Variationen erlaubt und dazu dient, dass die zu einem bestimmten Datenwert in die Datenanwendung 9 eingetragene Zeichenfolge exakt diesem Datenformat entspricht. Hierdurch werden die Einträge in der Datenanwendung zu bestimmten Datenwerten bzw. in bestimmten Datenfeldern immer gleich formatiert, was die spätere Bearbeitung der derart abgespeicherten Daten erheblich vereinfacht. Vorzugsweise wird auch im Fenster 15 die ausgelesene Zeichenfolge in dieser auf das Datenanwendungsformat normierten Darstellung dargestellt, so dass der Benutzer sieht, in welcher Form die Zeichenfolge übertragen wird.

Bei dem in Fig. 1 gezeigten Ausführungsbeispiel beruht das Dokument 12 auf einer Grafikdatei, nämlich einer tiff-Datei. Damit die Datenwerte aus dieser Datei gelesen werden können, wird diese Grafikdatei beim Laden derselben, bzw. beim Starten des erfindungsgemäßen Verfahrens zunächst mittels einer automatischen Zeichenerkennung (OCR-Verfahren) in eine Textdatei umgesetzt. Bei vorliegendem Ausführungsbeispiel wird die Grafikdatei und nicht die Textdatei angezeigt, wobei die beiden Dateien derart verbunden sind, dass beim Kennzeichen eines Datenwertes in der Grafikdatei parallel eine virtuelle Kennzeichnung der entsprechenden Zeichenfolge in der korrespondierenden Textdatei erfolgt, wobei das Auslesen der Zeichenfolge dann aus der Textdatei erfolgt. Es ist jedoch auch möglich, nach der automatischen Zeichenerkennung das Dokument 12 anhand der hierdurch erzeugten Textdatei in einer Dokumentenanwendung darzustellen.

Bei Dokumenten, die von Haus aus als Textdatei (z.B. MS-Word-Datei, rtf-Datei, txt-Datei, Email, etc.) vorliegen, ist eine Aufbereitung mittels einer automatischen Zeichenerkennung selbstverständlich nicht notwendig.

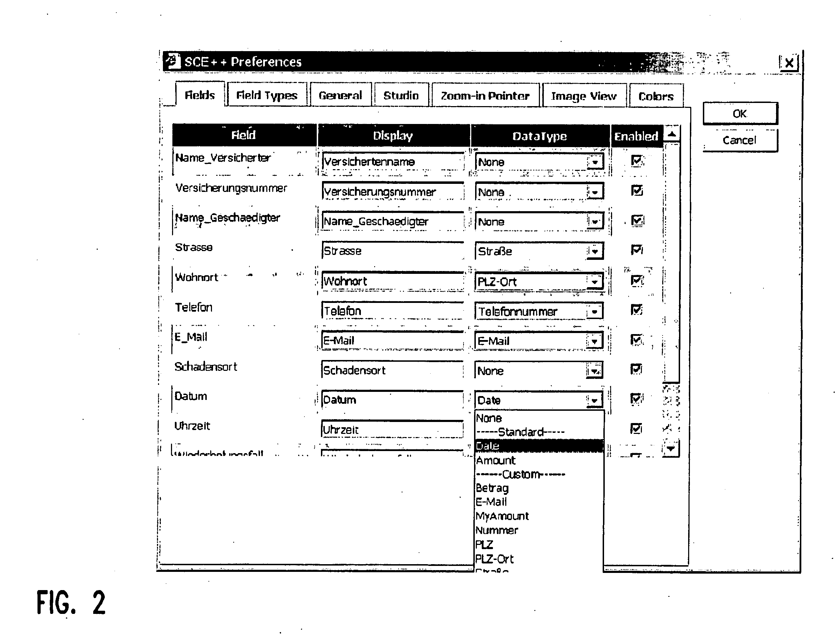

Das erfindungsgemäße System umfasst auch eine Konfigurationsroutine zum Konfigurieren des Datentransfers von der Dokumentenanwendung 10 zur Datenanwendung 9. Das Kernelement der Konfigurationsroutine ist eine Tabelle (Fig. 2) die an der ersten Spalte (Field) alle Datenfelder eines Datensatzes der Datenanwendung enthält, in einer zweiten Spalte (Display) die Bezeichnung der Datenfeldnamen und in einer dritten Spalte (DataTyp) den Datentype enthält. Die Datenfeldnamen und die Datentypen können vom Benutzer konfiguriert werden, wobei die Datenfeldname frei veränderbar sind. Bei den Datentypen kann aus einer Liste von Datentypen ausgewählt werden. In Fig. 2 ist diese Liste bei den entsprechenden Feld zum Datum dargestellt. Hierin können Standardformate (Standard) als auch selbsttätig erstellte Datentypen (Custom) ausgewählt werden.

In einer weiteren, vierten Spalte (enabled) können die einzelnen Datenfelder aktiviert, bzw. deaktiviert werden, indem eine Häkchen gesetzt, bzw. nicht gesetzt wird. Nur zu den aktivierten Datenfeldern werden bei dem erfindungsgemäßen Verfahren Datenwerte ausgelesen und in die Datenanwendung 9 übertragen. Diese aktivierten Datenfelder stellen somit den Satz vorbestimmter Datenfelder dar, in die Daten aus der Dokumentenanwendung mit dem erfindungsgemäßen Verfahren eingetragen werden.

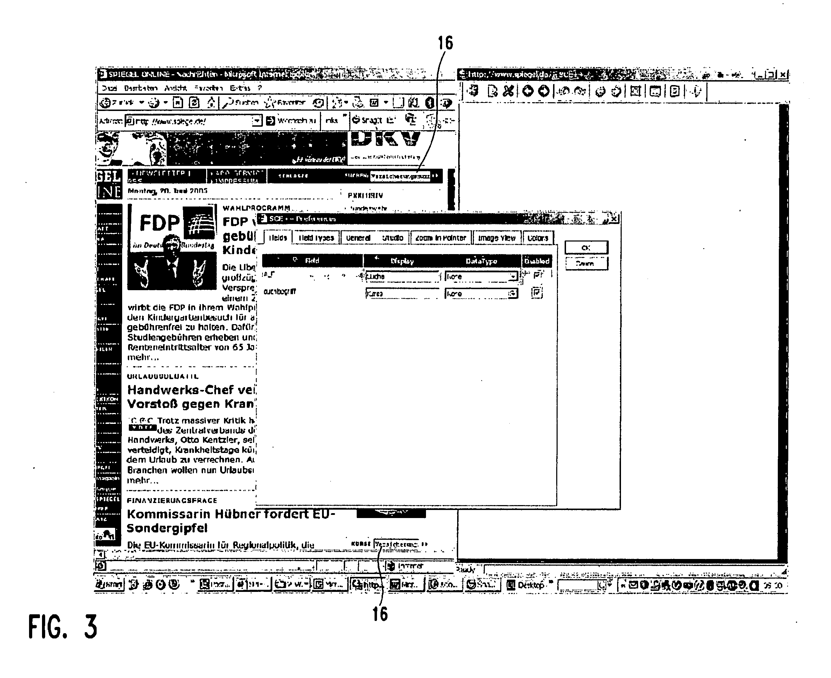

Das Erzeugen einer solchen Konfigurationstabelle erfolgt in der Regel mit einer Routine, die die Datenstruktur einer bestimmten Datenanwendung analysiert und die entsprechenden Datenfelder ermittelt. In Fig. 3 ist als Datenanwendung ein Internet-Browser dargestellt, indem eine bestimmte Homepage aufgerufen ist, in welcher zwei Datenfelder 16 aufgeführt sind. Die die Homepage definierende Datei (hier: html-Datei) wird von der Routine gelesen und auf entsprechende Datenfelder untersucht. Hierbei wurden die Datenfelder "A_F" und "suchbegriff" ermittelt. Mit der Tabelle können, wie es oben erläutert ist, die Datenfeldnamen und die Datentypen entsprechend konfiguriert werden.

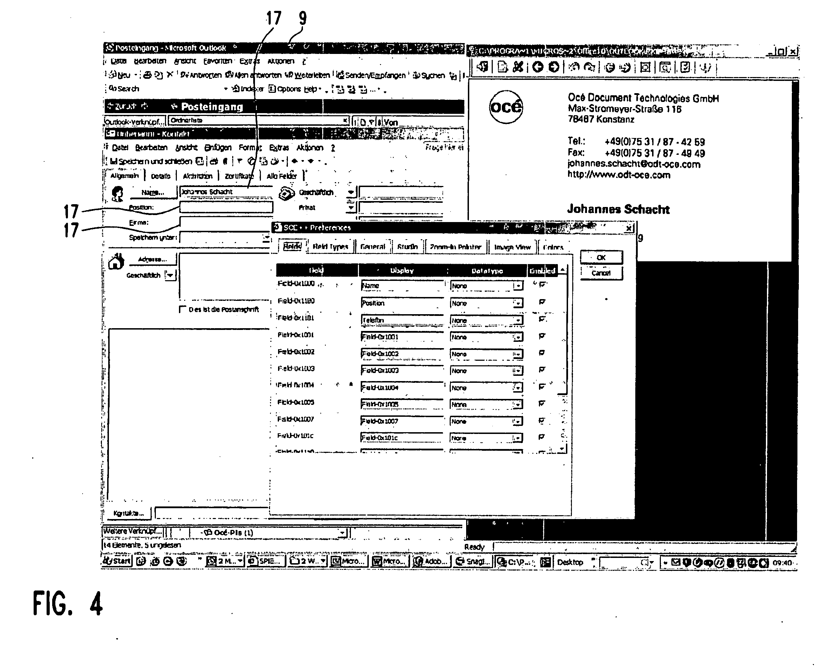

Derartige Datenstrukturen können von standardisierten Datenanwendungen, wie html-Seiten, Datenbanken, Tabellenkalkulationsprogrammen automatisch gelesen und erstellt werden. Es gibt jedoch auch nicht standardisierte Datenanwendungen, oder Datenanwendungen, für die ein automatisches Analysieren der Datenfelder nicht vorgesehen ist. Um das erfindungsgemäße Verfahren auch bei solchen Datenanwendungen einsetzen zu können ist eine alternative Routine zum Erzeugen der Konfigurationstabelle vorgesehen, bei welcher eine grafische Eingabemaske, bzw. Formular der Datenanwendung analysiert wird. Hierbei werden die Begrenzungslinien der einzelnen Datenfelder 17 (Fig. 4) automatisch erkannt. Für jedes Datenfeld wird eine Bezeichnung erzeugt (z.B. Field-0x1000). Für jedes Datenfeld wird eine Zeile in der Konfigurationstabelle angelegt. Diese Zeile wird mit dem Datenfeld der Datenanwendung 9 verknüpft. In Fig. 4 ist als Datenanwendung ein Emailprogramm, nämlich Microsoft Outlook^{®} dargestellt. Mit der so erzeugten Konfigurationstabelle können dann wiederum die Datenfeldnamen, die aus der Dokumentenanwendung zu lesen sind, konfiguriert werden.

Diese Konfiguration ist so einfach, dass sie von einem Benutzer ohne detaillierte Programmier- bzw. Informatikkenntnisse ausgeführt werden kann. Damit die Datenübertragung aus der Dokumentenanwendung in die Datenanwendung gut funktioniert, ist lediglich eine ausreichend große Liste von Datentypen vorzusehen. Die meisten Datentypen können mit Standardformaten erfasst werden.

Die Erfindung ist insbesondere dazu geeignet, als Computerprogramm (Software) realisiert zu werden. Sie kann damit als Computerprogramm-Modul als Datei auf einem Datenträger wie einer Diskette, CD-Rom, DVD oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann insbesondere in einem Computer oder in einem Computernetzwerk Anwendung finden. Dabei ist klar, daß entsprechende Computer, auf denen die Erfindung angewandt wird, weitere, an sich bekannte technische Einrichtungen wie z.B. Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Die Erfindung kann folgendermaßen kurz zusammengefasst werden:

Die Erfindung betrifft ein Verfahren und ein System zum Übertragung von Daten aus einer Dokumentenanwendung in eine Datenanwendung. Hierbei wird ein Datenwert in einem Dokument von einem Benutzer gekennzeichnet, z.B. indem ein Cursor in die Nähe des Datenwertes bewegt wird. Die diesen Datenwert darstellende Zeichenfolge wird dann automatisch festgelegt und ausgelesen. Der Benutzer kann dann lediglich durch betätigen einer Taste den Datenwert in die Datenanwendung übertragen. Weitere Datenwerte werden gleichermaßen ausgelesen. Das Übertragen der Datenwerte kann vollständig in der Dokumentenanwendung durchgeführt werden. Da die einzelnen Datenwerte nur gekennzeichnet werden müssen und danach eine Übertragung durch eine Tastenbetätigung veranlasst werden muss, erfolgt das Übertragen der Datenwerte sehr schnell, wodurch erheblich Arbeitszeit im Vergleich zu herkömmlichen Verfahren eingespart wird.

### Bezugszeichenliste

- 1: Computersystem
- 2: Computer
- 3: zentrale Recheneinheit
- 4: Speichereinrichtung
- 5: Interface
- 6: Anzeigeeinrichtung
- 7: Eingabeeinrichtung (Tastatur)
- 8: Eingabeeinrichtung (Computermaus)
- 9: Datenanwendung
- 10: Dokumentenanwendung
- 11: Datenfeld
- 12: Dokument
- 13: Icon: SCE
- 14: Cursor
- 15: Fenster
- 16: Datenfeld
- 17: Datenfeld

### Verfahrensschritte

- S1: Beginn
- S2: Anzeige: Datenfeldname
- S3: Kennzeichnen Datenwert
- S4: Bestimmen Zeichenfolge
- S5: Auslesen Zeichenfolge
- S6: Eintragen Zeichenfolge
- S7: weiterer Datenwert?
- S8: Ende

## Patentansprüche

1. System zum Übertragen von Daten aus einer Dokumentenanwendung in eine Datenanwendung umfassend einen Computer (2) mit einer zentralen Recheneinheit (3), einer Speichereinrichtung (4), einer Anzeigeeinrichtung (6) und einer Eingabeeinrichtung (7, 8), wobei in der Speichereinrichtung (4) ein zum Ausführen eines Verfahrens zum computergestützten Übertragen von Daten aus einer Dokumentenanwendung (10) in eine Datenanwendung (9) mit einem Satz Datenfelder (11) ausgebildetes Computerprogramm gespeichert ist,
wobei beim Ausführen des Verfahrens in einer auf dem Computer (2) geöffneten Dokumentenanwendung (10) mittels der Anzeigeeinrichtung (6) ein Dokument (12) angezeigt wird, aus dem Daten in die ebenfalls auf dem Computer (2) geöffnete Datenanwendung (9) zu übertragen sind, wobei
a) auf der Anzeigeeinrichtung (6) der Name eines Datenfeldes (11) angezeigt wird, in welches Daten einzutragen sind, und
b) ein Mittel zur Verfügung gestellt wird, mit dem durch Kennzeichnen eines entsprechenden Datenwertes im Dokument (12) auf der Anzeigeeinrichtung (6) die den Datenwert darstellende Zeichenfolge automatisch aus dem Dokument (12) ausgelesen und durch Betätigen einer vorbestimmten Taste in ein dem Datenfeldname entsprechendes Datenfeld (11) in der Datenanwendung (9) eingetragen wird,
wobei das System eine Konfigurationsroutine zum Konfigurieren des Datentransfers von der Dokumentenanwendung zur Datenanwendung umfasst, wobei die Konfigurationsroutine Mittel zum Definieren der Datenfeldnamen, zum Zuordnen der Datenfeldnamen zu Datenfeldern in der Datenanwendung und zum Zuweisen bestimmter Datentypen zu den definierten Datenfeldnamen aufweist,
wobei das Mittel zum Definieren der Datenfeldnamen eine Routine ist, die automatisch die Datenfelder einer
Datenanwendung liest und eine Liste von Datenfeldnamen erstellt, und
wobei die Datenfelder anhand von Begrenzungslinien von Datenfeldern in einer grafischen Eingabemaske erkannt werden.

2. System nach Anspruch 1,
**dadurch gekennzeichnet,**
**dass** die Schritte a) und b) des Verfahrens wiederholt werden, bis in allen Datenfeldern (11) des Satzes entsprechende Daten eingetragen sind.

3. System nach Anspruch 1 oder 2,
**dadurch gekennzeichnet,**
**dass** bei dem Verfahren nach dem Kennzeichnen eines Datenwertes die entsprechende Zeichenfolge aus dem Dokument (12) ausgelesen und auf der Anzeigeeinrichtung (6)angezeigt wird.

4. System nach einem der Ansprüche 1 bis 3,
**dadurch gekennzeichnet,**
**dass** bei dem Verfahren beim Kennzeichnen eines Datenwertes aus dem Dokument (12) eine sich zwischen zwei Leerzeichen befindende Zeichenfolge zum Auslesen insbesondere automatisch ausgewählt wird, oder ein bestimmtes für den Datenfeldname vorgegebener Datentyp berücksichtigt wird und eine dementsprechend **gekennzeichnet**e Zeichenfolge automatisch ausgewählt werden.

5. System nach Anspruch 4,
**dadurch gekennzeichnet,**
**dass** Mittel zum Korrigieren der beim Kennzeichnen automatisch ausgewählten Zeichenfolge zur Verfügung gestellt werden.

6. System nach einem der Ansprüche 1 bis 5,
**dadurch gekennzeichnet,**
**dass** bei dem Verfahren zum Kennzeichnen eines Datenwertes ein Cursor (14) verwendet wird, der mittels einer
Steuereinrichtung (8) , wie z.B. einer Computermaus, den Datenwert kennzeichnet, indem sich der Cursor (14) in der Nähe der den Datenwert darstellenden Zeichenfolge befindet.

7. System nach Anspruch 6,
**dadurch gekennzeichnet,**
**dass** am Cursor (14) ein Fenster (15) angeordnet ist, in dem der Datenfeldname angezeigt wird.

8. System nach Anspruch 7,
**dadurch gekennzeichnet,**
**dass** nach dem Kennzeichnen eines Datenwertes und Auslesen der entsprechenden Zeichenfolge die ausgelesene Zeichenfolge in dem Fenster (15) dargestellt wird.

9. System nach einem der Ansprüche 1 bis 8,
**dadurch gekennzeichnet,**
**dass** nach dem Übertragen einer Zeichenfolge in die Datenanwendung ein Datenfeldname eines weiteren Datenfeldes eines Datensatzes der Datenanwendung angezeigt wird.

10. System nach einem der Ansprüche 1 bis 9,
**dadurch gekennzeichnet,**
**dass** alle Zeichenfolgen im angezeigten Dokument markiert werden, die dem Datentyp des zum angezeigten Datenfeldnamen korrespondierenden Datenfeldes (11) entsprechen, sofern ein bestimmter Datentyp dem Datenfeld (11) zugeordnet ist.

11. System nach einem der Ansprüche 1 bis 10,
**dadurch gekennzeichnet,**
**dass** die Zeichenfolge entsprechend einem vorbestimmten Datenanwendungsformat normiert wird, bevor sie in die Datenanwendung eingetragen wird.

12. System nach einem der Ansprüche 1 bis 11,
**dadurch gekennzeichnet,**
**dass** das angezeigte Dokument als Grafikdatei vorliegt und mittels einer OCR-Routine in eine Textdatei umgesetzt wird.

## Claims

1. A system for transferring data from a document application into a data application, comprising
a computer (2) with a central processing unit (3), a memory device (4), a display device (6) and an input device (7, 8), wherein a computer program fashioned for execution of a method for the computer-aided transfer of data from a document application (10) into a data application (9) with a set of data fields (11) is stored in the memory device (4),
wherein upon execution of the method in a document application (10) opened on the computer (2) a document (12) is displayed by means of the display device (6), from which document (12) data are to be transferred into the data application (9) likewise opened on the computer (2), wherein
a) the name of a data field (11) into which data are to be entered is displayed on the display device (6), and
b) means are provided with which, via identification of a corresponding data value in the document (12) on the display device (6), the character string representing the data value is automatically read out from the document (12) and entered into a data field (11) corresponding to the data field name in the data application (9) via actuation of a predetermined button,
wherein the system comprises a configuration routine for the configuration of the data transfer from the document application to the data application, wherein the configuration routine comprises means for the definition of the data field names, for the association of the data field names with data fields in the data application, and for the assignment of specific data types to the defined data field names,
wherein the means for the definition of the data field names is a routine that automatically reads the data fields of a data application and generates a list of data field names, and
wherein the data fields are detected in a graphical input mask using demarcation lines of data fields.

2. The system according to claim 1,
**characterized in that**
the steps a) and b) of the method are repeated until corresponding data have been entered into all data fields (11) of the set.

3. The system according to claim 1 or 2,
**characterized in that**
in the method the corresponding character string is read out from the document (12) and displayed on the display device (6) after the identification of a data value.

4. The system according to one of the claims 1 to 3,
**characterized in that**
in the method a character string located between two space characters is in particular automatically selected for readout in the identification of a data value from the document (12), or a specific data type predetermined for the data field name is considered and a correspondingly identified character string is automatically selected.

5. The system according to claim 4,
**characterized in that**
means are provided for the correction of the character string automatically selected upon identification.

6. The system according to one of the claims 1 to 5,
**characterized in that**
in the method for the identification of a data value a cursor (14) is used that identifies the data value by means of a control device (8), such as a computer mouse, **in that** the cursor (14) is located in proximity to the character string representing the data value.

7. The system according to claim 6,
**characterized in that**
a window (15) in which the data field name is displayed is arranged at the cursor (14).

8. The system according to claim 7,
**characterized in that**
the read-out character string is presented in the window (15) after the identification of a data value and readout of the corresponding character string.

9. The system according to one of the claims 1 to 8,
**characterized in that**
a data field name of a further data field of a data set of the data application is displayed after the transfer of a character string into the data application.

10. The system according to one of claims 1 to 9,
**characterized in that**
all character strings that correspond to the data type of the data field (11) corresponding to the displayed data field name are marked in the displayed document insofar as a specific data type is associated with the data field (11).

11. The system according to one of the claims 1 to 10,
**characterized in that**
the character string is standardized according to a predetermined data application format before it is entered into the data application.

12. The system according to one of the claims 1 to 11,
**characterized in that**
the displayed document exists as a graphic file and is converted into a text file by means of an OCR routine.

## Revendications

1. Système de transmission de données d'une application de documents dans une application de données, ledit système comportant un ordinateur (2) doté d'une unité centrale de calcul (3), d'un dispositif de mémorisation (4), d'un dispositif d'affichage (6) et d'un dispositif d'entrée (7, 8), un programme informatique, conformé pour mettre en oeuvre un procédé de transmission informatisé de données d'une application de documents (10) dans une application de données (9) qui comporte un ensemble de zones de données (11), étant mémorisé dans le dispositif de mémorisation (4),
un document (12) étant affiché au moyen du dispositif d'affichage (6) lors de la mise en oeuvre du procédé dans une application de documents (10) ouverte sur l'ordinateur (2), document duquel des données doivent être transmises dans l'application de données (9) également ouverte sur l'ordinateur (2), dans lequel
a) le nom d'une zone de données (11), dans laquelle des données doivent être entrées, est affiché sur le dispositif d'affichage (6), et
b) un moyen étant mis à la disposition à l'aide duquel, en caractérisant une valeur de données correspondante dans le document (12) sur le dispositif d'affichage (6), la chaîne de caractères représentant la valeur de données est lue automatiquement dans le document (12) et est entrée, en actionnant une touche prédéterminée, dans une zone de données (11), correspondant au nom de la zone de données, dans l'application de données (9),
le système comportant un sous-programme de configuration destiné à configurer le transfert de données depuis l'application de documents vers l'application de données, le sous-programme de configuration comportant des moyens pour définir les noms des zones de données, associer les noms des zones de données à des zones de données dans l'application de données, et affecter des types de données déterminés aux noms de zones de données qui ont été définis,
le moyen pour définir les noms de zones de données étant un sous-programme qui lit automatiquement les zones de données d'une application de données et établit une liste de noms de zones de données, et
les zones de données étant reconnues grâce à des lignes de délimitation de zones de données dans un masque d'entrée graphique.

2. Système selon la revendication 1, **caractérisé en ce que** les étapes a) et b) du procédé sont répétées jusqu'à ce que des données correspondantes soient entrées dans toutes les zones de données (11) de l'ensemble.

3. Système selon la revendication 1 ou 2, **caractérisé en ce que**, dans le procédé, après la caractérisation d'une valeur de données, la chaîne de caractères correspondante est lue dans le document (12) et affichée sur le dispositif d'affichage (6).

4. Système selon l'une des revendications 1 à 3, **caractérisé en ce que,** dans le procédé, lors de la caractérisation d'une valeur de données, une chaîne de caractères se trouvant entre deux caractères d'espacement est choisie, en particulier automatiquement, dans le document (12) pour la lecture, ou un type de données déterminé, prescrit pour le nom d'une zone de données, est pris en compte, et une chaîne de caractères **caractérisée** de façon appropriée est alors choisie automatiquement.

5. Système selon la revendication 4, **caractérisé en ce que** l'on dispose de moyens pour corriger la chaîne de caractères choisie automatiquement lors de la caractérisation.

6. Système selon l'une des revendications 1 à 5, **caractérisé en ce que,** dans le procédé, pour caractériser une valeur de données, on utilise un curseur (14) qui caractérise la valeur de données au moyen d'un dispositif de commande (8), comme par exemple une souris informatique, en plaçant le curseur (14) près de la chaîne de caractères représentant la valeur de données.

7. Système selon la revendication 6, **caractérisé en ce qu'**une fenêtre (15), dans laquelle le nom d'une zone de données est affiché, est disposée au niveau du curseur (14).

8. Système selon la revendication 7, **caractérisé en ce que,** après la caractérisation d'une valeur de données et la lecture de la chaîne de caractères correspondante, la chaîne de caractères lue est représentée dans la fenêtre (15).

9. Système selon l'une des revendications 1 à 8, **caractérisé en ce que**, après la transmission d'une chaîne de caractères dans l'application de données, un nom de zone de données d'une autre zone de données d'un ensemble de données de l'application de données est affiché.

10. Système selon l'une des revendications 1 à 9, **caractérisé en ce que** l'on marque dans le document affiché toutes les chaînes de caractères qui correspondent au type de données de la zone de données (11) correspondant au nom de zone de données affiché, dans la mesure où un type de données déterminé est associé à la zone de données (11).

11. Système selon l'une des revendications 1 à 10, **caractérisé en ce que** la chaîne de caractères est normée conformément à un format d'application de données prédéterminé avant que ladite chaîne soit entrée dans l'application de données.

12. Système selon l'une des revendications 1 à 11, **caractérisé en ce que** le document affiché se présente sous la forme d'un fichier graphique, et est converti en un fichier texte au moyen d'un sous-programme OCR.
